# EUROPEAN PATENT APPLICATION

(11) **EP 1 848 209 A2**
(43) Date of publication of application: **24.10.2007**
(21) Application number: 07007820.9
(22) Date of filing: 17.04.2007
(51) Int. Cl.: H04N 5/57

(54) **Apparatus and method for adjusting image**

(30) Priority: 18.04.2006 JP 2006114140
(71) Applicant: Pioneer Corporation, Tokyo 153-8654 (JP)
(72) Inventor: Suzuki, Masahiro c/o Pioneer Corporation, Tokyo 143-8564 (JP); Ochiai, Kazunori c/o Pioneer Corporation, Tokyo 143-8564 (JP); Urakami, Hiroyuki c/o Pioneer Corporation, Tokyo 143-8564 (JP); Matsuno, Atsushi c/o Pioneer Corporation, Tokyo 143-8564 (JP)
(74) Representative: Grünecker, Kinkeldey, Stockmair & Schwanhäusser Anwaltssozietät

(57) **Abstract**

An image adjusting apparatus is provided, by which detailed and highly precise adjustments is performed on the basis of not only an image being displayed but also characteristics of the image being displayed when adjusting image quality of the image being displayed on a television or the like. The image adjusting apparatus includes: an adjusting device adjusting image quality parameters for an inputted image; a characteristic quantity extracting device extracting data indicating characteristic quantity of the inputted image from the inputted image, the characteristic quantity corresponding to the image quality parameters to be adjusted by the adjusting device; a composing device composing a display image simultaneously showing the data indicating the characteristic quantity extracted by the characteristic quantity extracting device and the inputted image; and a display device displaying the display image composed by the composing device.

## Description

### BACKGROUND OF THE INVENTION

### (1) Field of the Invention

The present invention relates to an apparatus and method for adjusting an image by image quality parameters such as brightness of the image.

### (2) Description of the Related Art

So far, in order to adjust an image quality of an image displayed on a television and so on, a knob or button for adjusting the image quality attached to a television set has been operated or, alternatively, an image quality parameters (such as brightness) to be adjusted has been displayed on a screen by remote control so as to adjust the image quality. As a method for the adjustment, for example, there is a device disclosed in Japanese Patent Application Laid-Open No. H8-251498. The device disclosed in Japanese Patent Application Laid-Open No. H8-251498 is a device for controlling a screen display, which performs an exclusive character display on a screen so as to carry out various adjustments when a user performs the various adjustments such as white balance adjustment, focusing adjustment, brightness adjustment, contrast adjustment, sharpness adjustment and amplitude adjustment.

However, in the adjustment method disclosed in Japanese Patent Application Laid-Open No. H8-251498, since a user sensuously performs the adjustments relying upon only an image that the user sees, therefore it is difficult to perform highly precise adjustments such as an adjustment of a dynamic range of characteristics of brightness or color of an inputted image.

### SUMMARY OF THE INVENTION

It is therefore an objective of the present invention to solve the above problem and to provide an apparatus and method for adjusting an image, which enables to perform highly precise adjustments, for example, on the basis of characteristics of an image being displayed.

In order to attain the above objective, the present invention is to provide an image adjusting apparatus including:
an adjusting device adjusting image quality parameters for an inputted image;
a characteristic quantity extracting device extracting data indicating characteristic quantity of the inputted image from the inputted image, the characteristic quantity corresponding to the image quality parameters to be adjusted by the adjusting device;
a composing device composing a display image simultaneously showing the data indicating the characteristic quantity extracted by the characteristic quantity extracting device and the inputted image; and
a display device displaying the display image composed by the composing device.

As for the image adjusting apparatus according to the present invention, in a characteristic quantity extracting device, data indicating characteristic quantity of the inputted image are extracted from the inputted image, the characteristic quantity corresponding to the image quality parameters to be adjusted, then the data indicating characteristic quantity of the inputted image and the inputted image are simultaneously displayed on the display device and then, the image quality parameters are adjusted. With the construction described above, since the image can be adjusted on the basis of the simultaneously displayed data indicating characteristic quantity of the image, therefore detailed and highly precise adjustments can be carried out on the basis of the characteristic quantity of the image in comparison with a case in which the adjustment are carried out only on the basis of the image.

The data indicating the characteristic quantity extracted by the characteristic quantity extracting device may be histograms. With the construction described above, since frequencies per element such as a level or a frequency of the various image quality can be displayed, therefore detailed and highly precise adjustments, for example, an adjustment of only a particular level or frequency component, can be carried out.

The data indicating the characteristic quantity extracted by the characteristic quantity extracting device may be quantity of noise. With the construction described above, since noise badly influencing upon the image quality can be displayed in a quantitative manner, therefore detailed and highly precise adjustments can be carried out in comparison with a case in which the adjustment are carried out only on the basis of the image.

The display image composed by the composing device may simultaneously include an image before adjustment by the adjusting device and an image after adjustment by the adjusting device. With the construction described above, since the adjustment can be carried out by seeing the images before and after a correction in addition to seeing the data indicating the characteristic quantity of the image, therefore the detailed adjustments can be easily carried out because one can easily recognize that how the image is changed when the data indicating the characteristic quantity of the image is changed how.

The present invention is also to provide an image adjusting method, in which image quality parameters are adjusted for an inputted image, including the steps of:
extracting data indicating characteristic quantity of the inputted image from the inputted image, the characteristic quantity corresponding to the image quality parameters to be adjusted;
composing a display image simultaneously showing the extracted data indicating the characteristic quantity and the inputted image; and
displaying the composed display image.

That is, the image adjusting method according to the present invention includes the steps of: extracting data indicating characteristic quantity of the inputted image from the inputted image, the characteristic quantity corresponding to the image quality parameters to be adjusted; composing a display image simultaneously showing the extracted data indicating the characteristic quantity and the inputted image; displaying the composed display image; and performing the adjustments of the image quality. With the construction described above, since the image can be adjusted on the basis of the simultaneously displayed data indicating characteristic quantity of the image, therefore detailed and highly precise adjustments can be carried out on the basis of the characteristic quantity of the image in comparison with a case in which the adjustment are carried out only on the basis of the image.

### BRIEF DESCRIPTION OF THE DRAWINGS

Figure 1 is a block diagram of the image adjusting apparatus according to EXAMPLE 1 and EXAMPLE 2 of the present invention;
Figure 2 is a flow chart illustrating adjustment actions of an image quality parameter of the image adjusting apparatus shown in Fig. 1;
Figure 3 is a graph illustrating an example of a histogram;
Figure 4 is an illustration of a display form on a monitor;
Figure 5 is an illustration of another display form on a monitor;
Figure 6 is an illustration of a further display form on a monitor;
Figure 7 is an illustration of a further display form on a monitor;
Figure 8 is an illustration of a further display form on a monitor;
Figure 9 is an illustration of a further display form on a monitor;
Figure 10 is an illustration of a further display form on a monitor;
Figure 11 is an illustration of a further display form on a monitor;
Figure 12 is an illustration of a further display form on a monitor;
Figure 13 is an illustration of a further display form on a monitor;
Figure 14 is an illustration of a further display form on a monitor;
Figure 15 is an illustration of a further display form on a monitor;
Figure 16 is an example of a graph indicating quantity of noise in EXAMPLE 3 of the present invention; and
Figure 17 is a block diagram in a case in which a microcomputer performs every function.

### DESCRIPTION OF THE PREFERRED EMBODIMENTS

### [EXAMPLE 1]

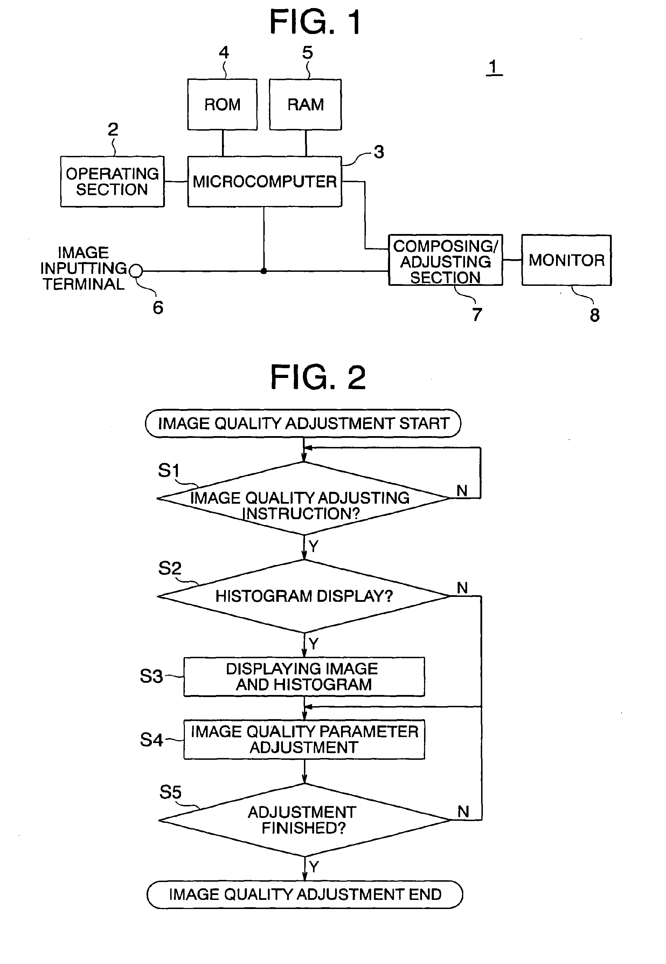

In the following, an image adjusting apparatus 1 according to EXAMPLE 1 of the present invention will be explained with reference to Figs. 1 - 4. As shown in Fig. 1, the image adjusting apparatus 1 includes an operating section 2; microcomputer 3, ROM 4, RAM 5, image inputting terminal 6, composing/adjusting section 7, and monitor 8. Image data to be inputted from the image inputting terminal 6 are data from a source (not shown in the figure) such as a digital versatile disk (DVD).

The operating section 2 is an inputting device for a user to adjust an image outputted from the image adjusting apparatus 1 and includes a cursor key and decision key for use upon adjustment. The operating section 2 may consist of, for example, a remotecontrol which can operate the image adjusting apparatus 1.

The microcomputer 3 as the characteristic quantity extracting device has a central processing unity (CPU) therein. The microcomputer 3 receives an instruction from the operating section 2, extracts the characteristic quantity from an image inputted from the image inputting terminal 6 by means of a control program stored in the ROM 4 (explained later on) so as to compose a histogram, and outputs the composed histogram to the composing/adjusting section 7. Upon adjusting the image quality parameters, the microcomputer 3 outputs the instruction such as increase or decrease in values of the image quality parameters from the operating section 2 to the composing/adjusting section 7.

The ROM 4 is a nonvolatile storage and stores a control program to be performed by the microcomputer 3. The RAM 5a rewritable nonvolatile storage and provisionally stores data for the microcomputer 3 to perform various processing.

The composing/adjusting section 7 as the adjusting device and the composing device composes a display image simultaneously showing the image inputted from the image inputting terminal 6 and the histogram composed by the microcomputer 3 and outputs the composed display image to a monitor 8. The composing/adjusting section 7 performs the adjustments of the image quality parameters of the image inputted from the image inputting terminal 6 on the basis of an instruction from the microcomputer 3 and outputs the adjusted image to the monitor 8.

The monitor 8 as the display device is a display device, which displays the adjusted image inputted from the composing/adjusting section 7, and includes a cathode ray tube (CRT), liquid crystal display, plasma display, rear projection display or front projection display.

In the following, as for the image adjusting apparatus 1 having a structure as shown in Fig. 1, an action when a user operates the operating section 2 so as to adjust brightness as the image quality parameter of an image displayed on the monitor 8 will be explained with reference to a flow chart shown in Fig. 2. The flow chart shown in Fig. 2 is realized when the CPU of the microcomputer 3 performs the control program stored in the ROM 4.

First, at step S1, it is judges whether or not a brightness adjustment instruction is done to the microcomputer 3 with button operation or the like by a user at the operating section 2. If the instruction is done (i.e. in a case of Y), the CPU proceeds to step S2. If the instruction is not done (i.e. in a case of N), the judgment is carried out again.

At step S2, it is selected whether or not a histogram display is to be done with button operation or the like by the user at the operating section 2. If the histogram display is to be done (i.e. in a case of Y), the CPU proceeds to step S3. If the histogram display is not to be done (i.e. in a case of N), the CPU proceeds to step S4.

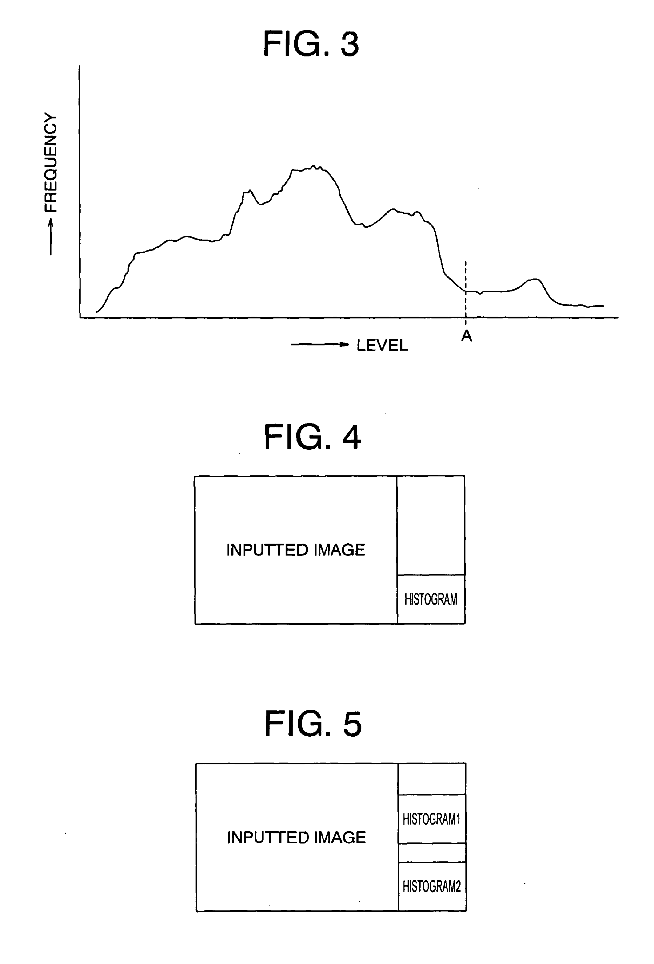

At step S3, the frequencies per each level of brightness of the inputted image as the characteristic quality of the inputted image are extracted with respect to the image inputted from the image inputting terminal 6 so as to compose a histogram as shown in Fig. 3, the composed histogram is outputted to the composing/adjusting section 7, and the CPU proceeds to step S4. The composing/adjusting section 7 composes a display image showing both of the histogram inputted from the microcomputer 3 and the image inputted from the image inputting terminal 6 as shown in Fig. 4 and outputs the composed display image to the monitor 8, which displays the composed display image.

As shown in Fig. 3, the histogram is a graph, wherein the frequencies per each level of brightness within the image (i.e. one frame in this EXAMPLE 1) are shown, having a level of brightness of the inputted image as its horizontal axis and frequency per each level as its longitudinal axis. That is, the histogram is data indicating the characteristic quantity, i.e. the frequency, which are obtained by composing respective levels of the brightness extracted per each of three primary colors RGB (red, green and blue) of light from the inputted image.

The level of the brightness means light and shade of the image, wherein a large level indicates a bright part while a small level indicates a dark part. Therefore, by using the histogram of the brightness, a character of the image can be shown, for example, an image including many components having large levels is a bright image, while an image including many components having small levels is a dark image. An indication of the histogram may be bar graphs each separate from one another per each level instead of the indication thereof as shown in Fig. 3, in which tip ends of the frequencies of the respective levels are connected to one another.

At step S4, the adjustment of the brightness is performed and the CPU proceeds to step S5. A user operates, for example, an on-screen display (OSD) displayed on a screen at the operating section 2 so as to perform the adjustment of the brightness. When the histogram is displayed, the user can perform the adjustment not only by seeing a change in the inputted image but also by confirming a change in the histogram displayed simultaneously on the screen. For example, by adjusting in such a manner that the frequencies larger than that of an A-level in Fig. 3 are increased, it is possible to adjust so as to enlarge a dynamic range of the brightness.

At step S5, it is judged whether or not an instruction to finish the adjustment is done from the operating section 2. If the instruction is done (i.e. in a case of Y), the adjustment of the brightness is finished. If the instruction is not done (i.e. in a case of N), the CPU returns to step S4.

According to EXAMPLE 1, in the image adjusting apparatus 1 for adjusting the image quality of the image, for example in a case of adjusting the brightness, a histogram is composed from levels of the brightness extracted from the image to be adjusted and the adjustment is carried out with reference to both of the image and the histogram, so that the adjustment on the basis of the histogram that indicates an objective characteristic quantity of the image can be performed, that is, highly precise adjustment including, for example, an enlargement of the dynamic range is possible. Further, for example, when adjusting the brightness, besides simply making lighter or making darker, it is possible to adjust in more detail per each level corresponding to the histogram, that is, very fine adjustment can be realized.

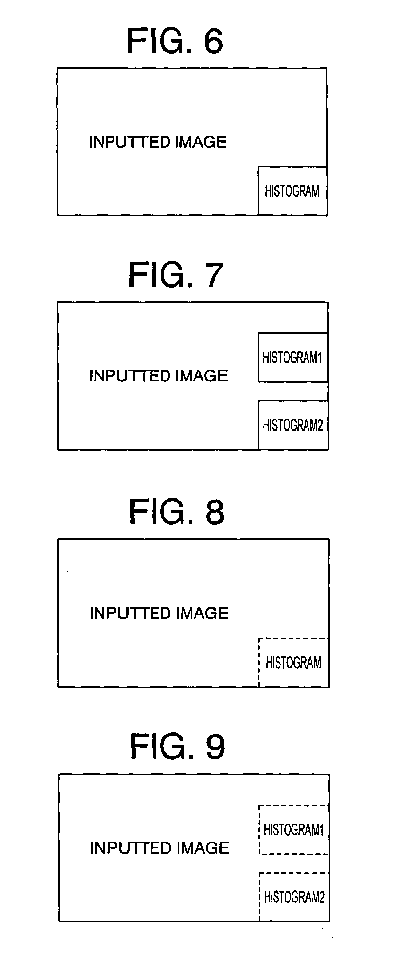

In the preferred embodiment described above (i.e. in EXAMPLE 1), only an example of the histogram of the brightness is explained. However, if there is another adjustable parameter, a plurality of histograms as shown in Fig. 5 may be displayed. For example, by displaying quantity of noise of the whole image is displayed like a level meter, it is possible to facilitate adjustment of sharpness. In the preferred embodiment described above, the inputted image and the histogram are displayed on a screen by dividing the screen into two parts (i.e. picture-side-picture display). However, instead, as shown in Figs. 6 and 7, the histogram may be displayed by superimposing the histogram on the inputted image (i.e. picture-in-picture display). Alternatively, as shown in Figs. 8 and 9, the histogram may be displayed by superimposing the histogram on the inputted image in a permeable manner (i.e. alpha-blend display). The position of displaying the histogram may not be limited at right end of the screen, that is, the position of displaying the histogram may be at left end, upper end or lower end.

### [EXAMPLE 2]

In the following, an image adjusting apparatus 1 according to EXAMPLE 2 of the present invention will be explained.

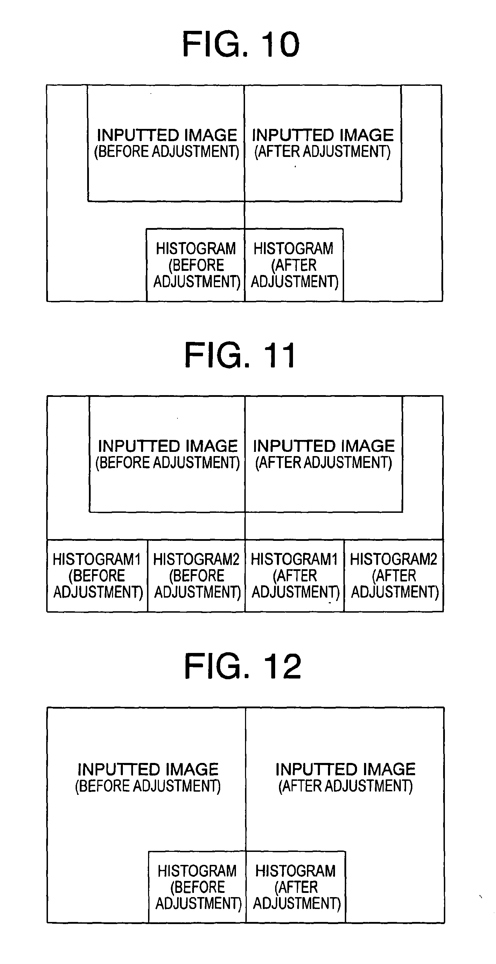

A construction and flow chart of this EXAMPLE 2 are similar to those of EXAMPLE 1. In EXAMPLE 1 as shown in Fig. 4, only one inputted image is displayed, then the image quality is changed in response to an adjustment action, that is, an image after the adjustment is displayed. In this EXAMPLE 2 as shown in Fig. 10, an image before an adjustment and an image after the adjustment are simultaneously displayed and further, a histogram before the adjustment and a histogram after the adjustment are also displayed simultaneously.

That is, when an image quality adjusting instruction is done at step S 1 in a flow chart shown in Fig. 2, a screen is divided into two parts at the composing/adjusting section 7. At that time, the same image is displayed on the respective divided two screens. Then, when a histogram display instruction is done at step S2, histograms are displayed on the respective two screens as shown in Fig. 10 at step S3. Then, an adjustment of an image quality parameter (brightness) is performed at step S4. When the adjustment is performed, the inputted image after the adjustment and the histogram after the adjustment are changed in response to the adjustment. However, the inputted image before the adjustment and the histogram before the adjustment do not reflect the adjustment, that is, they are not changed in response to the adjustment. Therefore, a user can carry out an adjustment seeing both of those before and after the adjustment.

According to EXAMPLE 2, for example, when the brightness is to be adjusted, a histogram of an image to be adjusted is composed, then the image and histogram before the adjustment and the image and histogram after the adjustment are displayed and then, the adjustment is performed, so that detailed adjustments can be easily carried out because one can easily recognize that how the image is changed when the histogram is changed how.

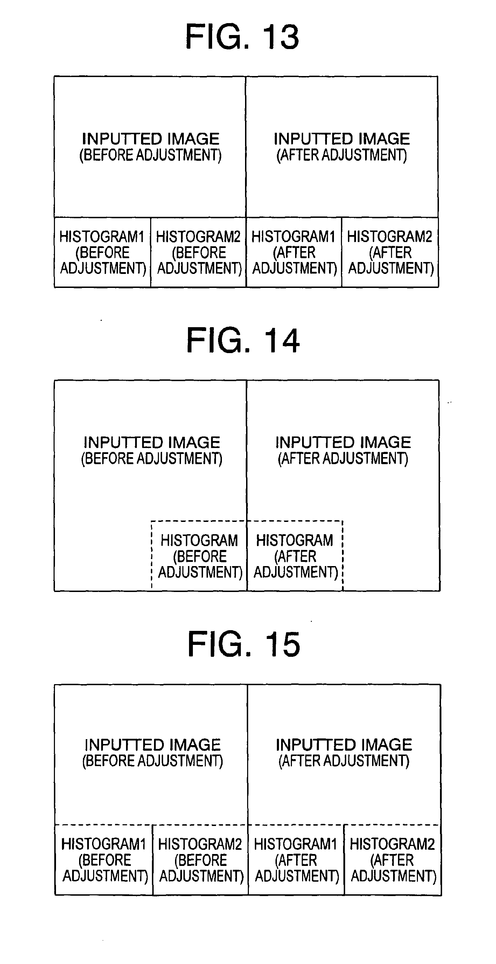

Similarly to EXAMPLE 1, in this EXAMPLE 2, as shown in Fig. 11, a plurality of histograms may be displayed. As shown in Figs. 12 and 13, the histogram may be displayed by superimposing the histogram on the inputted image (i.e. picture-in-picture display). Alternatively, as shown in Figs. 14 and 15, the histogram may be displayed by superimposing the histogram on the inputted image in a permeable manner (i.e. alpha-blend display). The position of displaying the histogram may not be limited at right end of the screen, that is, the position of displaying the histogram may be at left end, upper end or lower end.

Further, in the above EXAMPLES 1 and 2, an image quality parameter for composing a histogram is not limited to brightness. Instead, the image quality may be composed from respective components of three primary colors RGB (red, green and blue) of light or from a spatial frequency characteristic of an inputted image.

### [EXAMPLE 3]

In the following, an image adjusting apparatus 1 according to EXAMPLE 3 of the present invention will be explained.

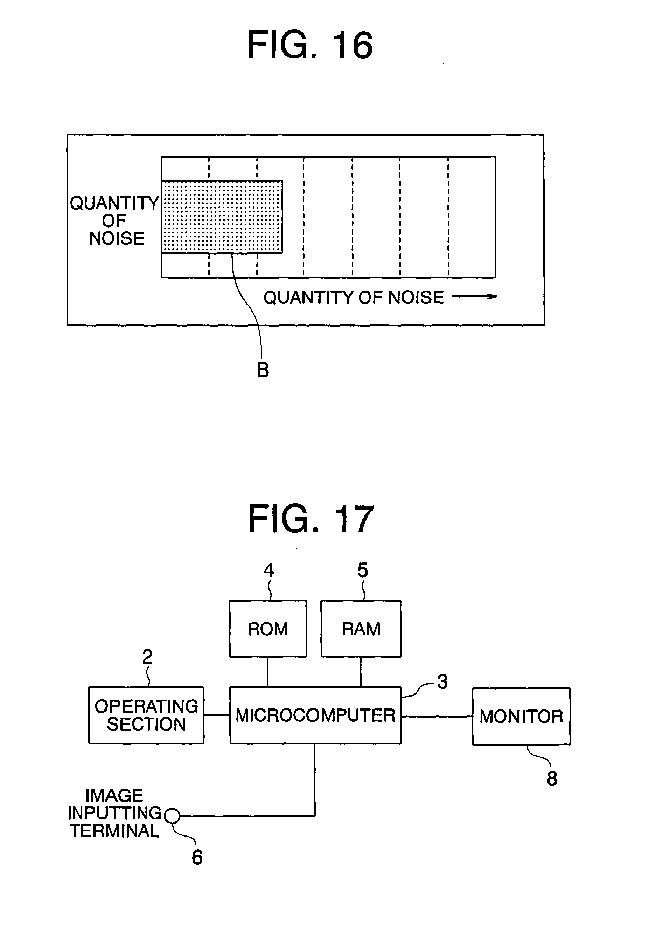

A construction of this EXAMPLE 3 is similar to that of EXAMPLES 1 and 2. In EXAMPLES 1 and 2, the histograms per brightness level are extracted as the characteristic quantity of an inputted image and are displayed on the monitor 8. In this EXAMPLE 3, a graph extracting quantity of noise of an image as shown in Fig. 16 is composed and displayed on the monitor 8. Therefore, a flow chart shown in Fig. 2 remains unchanged except a point that the histogram described in the flow chart must be replaced by a bar graph. Here, the noise is mixed-into or generated when an image is recorded, regenerated, coded or decoded, and the noise badly affects on image quality of an image since pixels fluctuate at random resulting in that values of the pixels are changed from their original values.

In Fig. 16, a quantity of noise is indicated by a bar B, wherein the horizontal axis is the quantity of noise. For example, the number of pixels that are judged to be noise is counted per frame and a value of the number is reflected to the bar B. In this case, the quantity of noise of horizontal axis shows the number of the pixels that are judged to be noise. For example, the judgment of noise is carried out on the basis of comparison of the same pixels between the frames or comparison with neighbor pixels within the frame. Then, on the basis of the bar graph thus displayed, for example, an adjustment of intensity of noise-reduction is performed. Similarly to EXAMPLES 1 and 2, in this EXAMPLE 3 the position of the bar graph B in Fig. 16 may be displayed in a form of picture-side-picture, picture-in-picture or alpha-blend, and the position of the display may be at right end, left end, upper end or lower end. Further, similarly to EXAMPLE 2, two graphs of before adjustment and after adjustment may be displayed.

According to EXAMPLE 3, in the image adjusting apparatus 1 for adjusting the image quality of the image, a bar graph is composed from quantity of noise extracted from the image to be adjusted and the adjustment, for example, of intensity of noise reduction is carried out with reference to both of the image and the bar graph, so that the adjustment on the basis of the bar graph that indicates an objective characteristic quantity of the image can be performed, that is, highly precise adjustment is possible.

In the above EXAMPLES 1 - 3, a histogram or a bar graph is used as the data that indicate the characteristic quantity of an inputted image. However, the data may be any data provided that the data are processed so as to objectively indicate a specific characteristic quantity which is extracted from the image.

In the above EXAMPLES, the microcomputer 3 extracts a histogram, the composing/adjusting section 7 composes a display image, and the monitor 8 displays the display image. Instead, as shown in Fig. 17, a control program to be performed in the microcomputer 3 may carry out the function of the composing/adjusting section 7. Thereby, the present invention can be put into practice by a software in the microcomputer 3.

In the above EXAMPLES, after finishing the adjustment, the data indicating the characteristic quantity of the image such as a histogram is erased. However, instead, the data may be kept being displayed after finishing the adjustment. Thereby, various characteristic quantity can be always displayed.

An image adjusting apparatus according to the present invention can be applied to equipment that can adjust image quality of an image such as a television set, DVD player/recorder, DVD recording/playback device, DVD recording/playback device with HDD (hard disk drive) or VCR (video cassette recorder).

According to the EXAMPLES described above, the following image adjusting apparatus and image adjusting method can be attained.

[Additional Remark 1] An image adjusting apparatus 1 including: an composing/adjusting section 7 adjusting brightness for an inputted image; a microcomputer 3 extracting a histogram corresponding to brightness to be adjusted by the composing/adjusting section 7 from the inputted image; the composing/adjusting section 7 composing a display image simultaneously showing the histogram extracted by the microcomputer 3 and the inputted image; and a monitor 8 displaying the display image composed by the composing/adjusting section 7.

According to the image adjusting apparatus 1 described above, since the image can be adjusted on the basis of the simultaneously displayed histogram, therefore detailed and highly precise adjustments can be carried out on the basis of the histogram in comparison with a case in which the adjustment are carried out only on the basis of the image.

[Additional Remark 2] An image adjusting method, in which brightness are adjusted for an inputted image, including the steps of: extracting a histogram corresponding to brightness to be adjusted from the inputted image; composing a display image simultaneously showing the extracted histogram and the inputted image; and displaying the composed display image.

According to the image adjusting method described above, since the image can be adjusted on the basis of the simultaneously displayed histogram, therefore detailed and highly precise adjustments can be carried out on the basis of the histogram in comparison with a case in which the adjustment are carried out only on the basis of the image.

The aforementioned preferred embodiments are described to aid in understanding the present invention and variations may be made by one skilled in the art without departing from the spirit and scope of the present invention.

Incidentally, the contents of Japanese Patent Application No. 2006-114140 are hereby incorporated by reference.

## Claims

1. An image adjusting apparatus comprising:
an adjusting device adjusting image quality parameters for an inputted image;
a characteristic quantity extracting device extracting data indicating characteristic quantity of the inputted image from the inputted image, the characteristic quantity corresponding to the image quality parameters to be adjusted by the adjusting device;
a composing device composing a display image simultaneously showing the data indicating the characteristic quantity extracted by the characteristic quantity extracting device and the inputted image; and
a display device displaying the display image composed by the composing device.

2. The image adjusting apparatus according to claim 1, wherein the data indicating the characteristic quantity extracted by the characteristic quantity extracting device are histograms.

3. The image adjusting apparatus according to claim 1, wherein the data indicating the characteristic quantity extracted by the characteristic quantity extracting device are quantity of noise.

4. The image adjusting apparatus according to claim 1, wherein the display image composed by the composing device simultaneously includes an image before adjustment by the adjusting device and an image after adjustment by the adjusting device.

5. An image adjusting method, in which image quality parameters are adjusted for an inputted image, comprising the steps of:
extracting data indicating characteristic quantity of the inputted image from the inputted image, the characteristic quantity corresponding to the image quality parameters to be adjusted;
composing a display image simultaneously showing the extracted data indicating the characteristic quantity and the inputted image; and
displaying the composed display image.
